# EUROPEAN PATENT APPLICATION

(11) **EP 4 498 529 A1**
(43) Date of publication of application: **29.01.2025**
(21) Application number: 24153054.2
(22) Date of filing: 22.01.2024
(51) Int. Cl.: H01R 4/66, H01R 11/05, H01R 11/09, H02G 3/00, E04H 12/22, H02G 13/00, H01R 4/02, H01R 4/36, H01R 101/00

(54) **GROUND ROD**

(30) Priority: 25.07.2023 KR 20230096493
(71) Applicant: Taesung Co., Ltd., Yeongju-si Gyeongsangbuk-do 36044 (KR)
(72) Inventor: KIM, Kwang Soo, 36015 Yeongju-si,Gyeongsangbuk-do (KR); KIM, Eun Ji, 42968 Daegu (KR)
(74) Representative: M. Zardi & Co S.A.

(57) **Abstract**

The present invention relates to a ground rod that is electrically connected to the ground and serves as a terminal, and more particularly, to a ground rod that allows for the smooth passage of a ground wire while being easily and conveniently buried in the ground without being hit. The ground rod according to the present invention includes: a rod body configured such that a head portion is formed at the top thereof and a sharp portion is formed at the bottom thereof; a bending connector formed as a pipe that is bent in an inverted and reversed L shape and has both ends open to allow a ground wire to pass therethrough, and welded horizontally to the side of the rod body; and fixing means configured to fix the ground wire having passed through the inside of the bending connector to the bending connector.

## Description

### CROSS-REFERENCE TO RELATED APPLICATION

This application claims the benefit of Korean Patent Application No. 10-2023-0096493 filed on July 25, 2023, which is hereby incorporated by reference herein in its entirety.

### BACKGROUND

### 1. Technical Field

The present invention relates to a ground rod that is electrically connected to the ground and serves as a terminal, and more particularly, to a ground rod that allows for the smooth passage of a ground wire while being easily and conveniently buried in the ground without being hit.

### 2. Description of the Related Art

In general, a ground rod has a structure in which a bundle of steel cores are coated with copper and thus current flows along the cores. A ground rod allows the ground wires of various electrical appliances and machinery to be electrically connected and fixed thereto, and serves to ground abnormal currents generated from the various electrical appliances or machinery by flowing them to the ground.

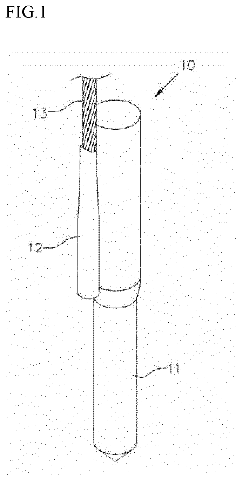

FIG. 1 is a perspective view of a conventional ground rod. As shown in the drawing, the conventional ground rod 10 includes a rod body 11, and a tubular connector 12 welded to the upper portion of the rod body 11 and pressed with portions of ground wires 13 inserted therein.

This ground rod 10 is installed by hitting the top of the rod body 11 using a striking device such as a hammer and thus burying the ground rod 10 in the ground at a predetermined depth in the state in which the tubular connector 12 is welded and attached to the rod body 11 in an integrated form, the ground wires 13 are inserted into the tubular connector 12, and then the tubular connector 12 is compressed to securely fix the ground wires 13 to the tubular connector 12.

However, the conventional ground rod 10 described above requires the hitting of the rod body 11 using a hammer when burying the ground rod 10 in the ground. Accordingly, a lot of hard work is required from an operator. When hitting is not appropriately performed, the top of the rod body 11 is dented or the rod body 11 is bent.

In addition, such conventional ground rods 10 are typically arranged in the form of a triangle at intervals of 2 m to effectively lower the resistance value, and then ground wires 13 are installed to pass around the ground rods 10.

However, conventionally, the ground wires 13 pass around the ground rods 10 by passing through vertically installed tubular connectors 12. In this process, the ground wires 13 are excessively bent, so that a problem arises in that it is significantly difficult to allow the ground wires 13 to pass around the ground rods 10.

### [Related Art Literature]

Patent Document: Korean Patent No. 10-2364894

### SUMMARY

The present invention has been conceived to overcome the above-described problem, and an object of the present invention is to provide a ground rod that allows a rod body to be easily and conveniently buried in the ground without hitting it and allows for the smooth passage of a ground wire.

According to an aspect of the present invention, there is provided a ground rod including: a rod body configured such that a head portion is formed at the top thereof and a sharp portion is formed at the bottom thereof; a bending connector formed as a pipe that is bent in an inverted and reversed L shape and has both ends open to allow a ground wire to pass therethrough, and welded horizontally to the side of the rod body; and fixing means configured to fix the ground wire having passed through the inside of the bending connector to the bending connector.

A spiral protrusion may be formed along the outer peripheral surface of the rod body in the vertical direction.

The head portion may be formed in a polygon shape, corresponding to the shape of a socket, to be inserted into the socket attached to a power tool.

The sharp portion may be formed in an oblique circular cone shape whose section is a right-angled triangle.

The fixing means may be compression portions respectively formed on both ends of the bending connector.

The fixing means may be screw holes respectively formed at both ends of the bending connector and tightening bolts configured to be fastened into the respective screw holes and come into close contact with the ground wire.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a perspective view of a conventional ground rod;
FIG. 2 is a perspective view of a ground rod according to the present invention;
FIG. 3 is a plan view showing a state in which the ground rod according to the present invention is used;
FIG. 4 is a sectional view showing a state in which the ground rod according to the present invention is installed;
FIG. 5 shows sectional plan views showing a state in which the ground rod according to the present invention is installed; and
FIG. 6 shows sectional plan views showing a state in which another embodiment of fixing means constituting part of the present invention is used.

### DETAILED DESCRIPTION

The features and advantages of the present invention will become more apparent from the following detailed description of embodiments based on the accompanying drawings.

Prior to the following detailed description, the terms and words used herein should be interpreted as having meanings and concepts consistent with the technical spirit of the present invention based on the principle that an inventor can appropriately define terminology to describe his or her invention in the best way.

Additionally, the terms and words used herein are only used to describe specific embodiments and are not intended to limit the present invention.

For example, singular expressions include plural expressions unless the context clearly indicates otherwise. Furthermore, it should be understood that the terms such as "include," "is provided with," and "have" are intended to designate the presence of one or more features, numbers, steps, operations, components, parts, or combinations thereof described in the specification, but do not preclude the presence or addition of one or more other features, numbers, steps, operations, components, parts or combinations thereof.

Furthermore, when a portion of a layer, a membrane, a region, a plate, or the like is described as being "on" another portion, this includes not only a case where the former portion is "directly on" the other portion, but also a case where the former portion is on the other portion with a third portion interposed therebetween. Conversely, when a portion of a layer, a membrane, a region, a plate, or the like is described as being "beneath" another portion, this includes not only a case where the former portion is "directly beneath" the other portion, but also a case where the former portion is beneath the other portion with a third portion interposed between the two portions.

In addition, although the terms containing ordinal numbers such as "first," "second," etc. used herein may be used to describe various components, the components are not limited by the above terms. The above terms are used only for the purpose of distinguishing one component from another.

When embodiments of the present invention will be described in detail below with reference to the accompanying drawings, the same reference symbols are used for the same components, and for the sake of clarity, only different portions are mainly described to avoid redundancy as much as possible.

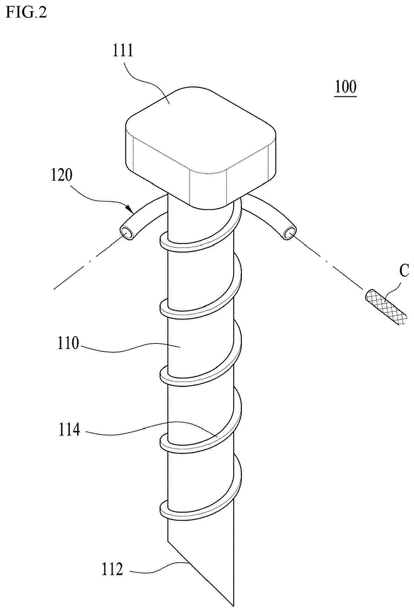

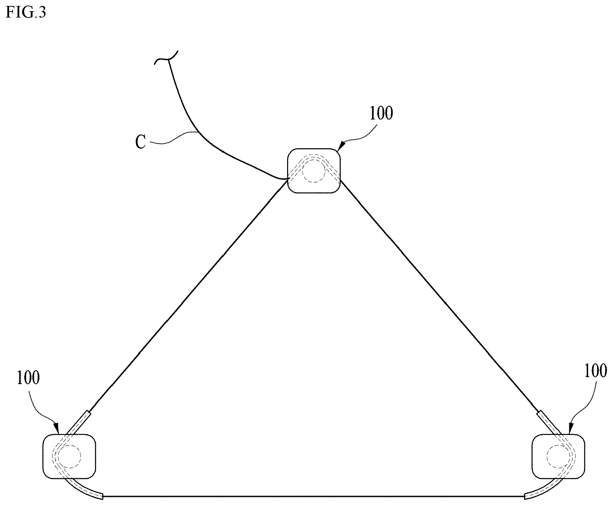

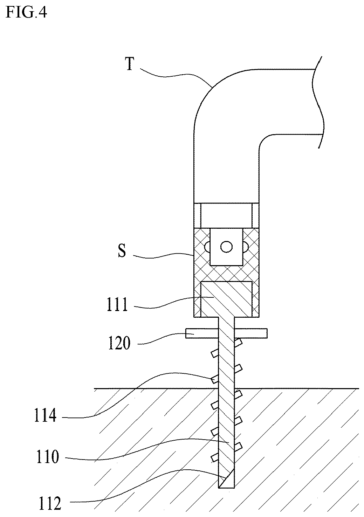

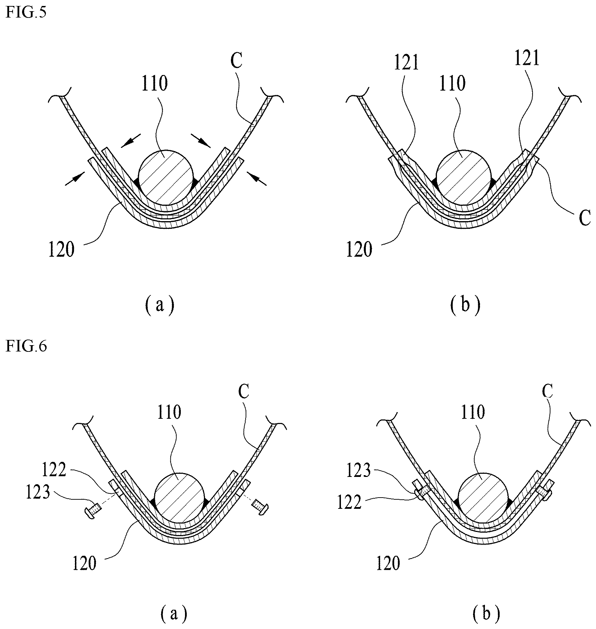

FIG. 2 is a perspective view of a ground rod according to the present invention, FIG. 3 is a plan view showing a state in which the ground rod according to the present invention is used, FIG. 4 is a sectional view showing a state in which the ground rod according to the present invention is installed, and FIG. 5 shows sectional plan views showing a state in which the ground rod according to the present invention is installed. As shown in these drawings, a ground rod 100 according to the present invention includes a rod body 110, a bending connector 120, and fixing means.

The rod body 110 is a cylindrical member in which a bundle of steel cores is coated with a conductive material such as copper, and is buried in the ground at a predetermined depth.

In addition, a head portion 111 is formed at the top of the rod body 110, and a sharp portion 112 is formed at the bottom of the rod body 110.

A power tool T that rotates the rod body 110 is coupled to the head portion 111 so that the rod body 110 can be easily inserted into the ground.

In this case, the head portion 111 may be formed in the shape of a polygon corresponding to the shape of a socket S so that it can be smoothly inserted into the socket S attached to the power tool T. Although the head portion 111 is shown as being formed in the shape of a square in the present embodiment, it is not limited thereto, but may be formed in one of various shapes such as a hexagon or an octagon depending on the shape of the socket S.

The sharp portion 112 has a shape that converges downward so that the rod body 110 can be smoothly inserted into the ground. Although the sharp portion 112 may be formed in the shape of a right circular cone with the left and right sides symmetrically inclined to converge at the center of the rod body 110, the line segment connecting the vertex of a cone and the center of the base of the cone may be formed in the shape of an oblique circular cone that is not perpendicular to the base of the cone.

In the case where the sharp portion 112 is formed in the shape of an oblique circular cone, when the rod body 110 rotates, the contact resistance to the ground becomes smaller than that of a right circular cone shape, and at the same time, the ground is excavated in a circular shape when the rod body 110 rotates, so that the rod body 110 may be more easily buried in the ground at a predetermined depth.

When this is taken into consideration, the sharp portion 112 is preferably formed in the shape of an oblique circular cone inclined only on one side so that the ground can be excavated to form a diameter corresponding to the thickness of the rod body 110.

In addition, the rod body 110 may have a spiral protrusion 114 formed in the vertical direction along the outer peripheral surface thereof.

When the spiral protrusion 114 is formed on the rod body 110, the soil formed during an excavation process is discharged out of the ground along the spiral projection 114, so that the rod body 110 can be rapidly buried in the ground. Due to the spiral protrusion 114, the coupling force between the rod body 110 and the ground increases, so that the rod body 110 can be buried more securely in the ground at a predetermined depth, and the ground area increases, so that discharge efficiency can be improved.

The bending connector 120 is a pipe open at both ends, and is welded horizontally to the side of the rod body 110.

The bending connector 120 has an inner diameter larger than the diameter of a ground wire C so that the ground wire C can pass smoothly through the bending connector 120.

In addition, the bending connector 120 is bent in an inverted and reversed L shape so that the ground wire C having passed through the inside of the bending connector 120 faces other ground rods 100 around which the ground wire C will pass. In this case, there is no need to specifically limit the bending angle of the bending connector 120, and one that is bent at an appropriate angle may be selected and applied depending on the locations at which other ground rods 100 around which the ground wire C will pass are installed.

Meanwhile, the ground wire C having passed through the inside of the bending connector 120 is securely fixed to the bending connector 120 through a fixing means.

In this case, the fixing means may be compression portions 121 formed at both ends of the bending connector 120. The compression portions 121 are formed using a compression tool at a work site only when the bending connector 120 is made of a metal material.

As shown in FIG. 6, the fixing means may be screw holes 122 formed at both ends of the bending connector 120 and tightening bolts 123 configured to be fastened into the screw holes 122 and come into close contact with the ground wire C.

In this case, there is an advantage in that the ground wire C can be fixed more easily because there is no need to form the compression portions 121 using a compression tool at a work site.

The ground rod 100 of the present invention configured as described above is buried in the ground at a predetermined depth in the following manner.

First, the rod body 110 is erected vertically on the ground at a grounding position, and then the socket S attached to the power tool T is inserted into the head portion 111 of the rod body 110.

Since the head portion 111 of the rod body 110 is formed in the shape of a polygon, it is smoothly inserted into the socket S.

Once the head portion 111 of the rod body 110 has been inserted into the socket S, the power tool T is operated.

By doing so, the rod body 110 is rotated and begins to be buried in the ground, and the operation of the power tool T is stopped when it is buried to a predetermined depth. Accordingly, an operator may rapidly and easily bury the rod body 110 in the ground at a predetermined depth by using the power tool T without hitting the rod body 110.

In this case, the rod body 110 is buried more rapidly in the ground due to the sharp portion 112 at the bottom of the rod body 110. In the case where the spiral protrusion 114 is formed in the vertical direction along the outer peripheral surface of the rod body 110, strong excavation force is given to the rod body 110, so that the rod body 110 is buried in the ground more rapidly, the coupling strength for the ground is significantly improved, and the discharge efficiency is significantly improved.

In this manner, the ground rods 100 are buried in the ground in the shape of a triangle at intervals of 2 m.

Meanwhile, after all the ground rods 100 have been completely buried, the ground wire C is sequentially passed through the bending connectors 120 attached to the respective rod bodies 110 of ground rods 100.

In this case, each of the bending connectors 120 is bent in an inverted and reversed L shape so that the bending connector 120 faces other ground rods 100 around which the ground wire C will pass. Accordingly, the ground wire C is naturally connected to the bending connectors 120 of the other ground rods 100 without being excessively bent, so that it is significantly easy to install the ground wire C around the ground rods 100.

Then, grounding is completed by securely fixing the ground wire C to the bending connectors 120 by compressing both ends of each of the bending connectors 120 using a fixing means or tightening the tightening bolts 123.

The ground rod of the present invention configured as described above is configured such that the tubular bending connector open at both ends thereof so that the ground wire can pass therethrough is welded horizontally to the side of the rod body, so that the ground wire is not bent excessively while passing around the ground rods unlike before, with the result that the ground wire can be installed on the ground rod considerably easily.

Furthermore, according to the present invention, in the case where the spiral protrusion is formed in the vertical direction on the rod body, there are advantages in that the ground rod can be buried in the ground considerably easily and conveniently by rotating the ground rod without hitting it, unlike before, and damage to the rod body that occurs during the hitting of the rod body is prevented.

Moreover, in the present invention, when the head portion of the rod body is formed in the shape of a polygon, the head portion can be inserted into the socket attached to a power tool, so that there is an advantage in that the rod body can be easily and rapidly rotated using a power tool, thereby facilitating installation work.

While the embodiments of the present invention have been shown and described with reference to the accompanying drawings, various modifications and alterations may be made without departing from the spirit or scope of the present invention as defined by the attached claims. These modifications and alterations should also be encompassed in the scope of the present invention.

## Claims

1. A ground rod comprising:
a rod body configured such that a head portion is formed at a top thereof and a sharp portion is formed at a bottom thereof;
a bending connector formed as a pipe that is bent in an inverted and reversed L shape and has both ends open to allow a ground wire to pass therethrough, and welded horizontally to a side of the rod body; and
fixing means configured to fix the ground wire having passed through an inside of the bending connector to the bending connector.

2. The ground rod of claim 1, wherein a spiral protrusion is formed along an outer peripheral surface of the rod body in a vertical direction.

3. The ground rod of claim 1, wherein the head portion is formed in a polygon shape, corresponding to a shape of a socket, to be inserted into the socket attached to a power tool.

4. The ground rod of claim 1, wherein the sharp portion is formed in an oblique circular cone shape whose section is a right-angled triangle.

5. The ground rod of claim 1, wherein the fixing means are compression portions respectively formed on both ends of the bending connector.

6. The ground rod of claim 1, wherein the fixing means are screw holes respectively formed at both ends of the bending connector and tightening bolts configured to be fastened into the respective screw holes and come into close contact with the ground wire.
